# FASCICULE DE BREVET EUROPEEN

(11) **EP 0 441 733 B1**
(45) Date de publication et mention de la délivrance du brevet: **08.06.1994**
(21) Numéro de dépôt: 91470002.6
(22) Date de dépôt: 30.01.1991
(51) Int. Cl.: H05B 7/06, F27D 11/10

(54) **Récipient métallurgique équipé d'au moins une électrode traversant sa paroi**
Metallurgisches Gefäss mit mindestens einer Elektrode, die durch die Bodenwand geht
Metallurgical vessel with at least one electrode passing through the bottom wall

(30) Priorité: 09.02.1990 FR 9001640
(43) Date de publication de la demande: 14.08.1991
(73) Titulaire: IRSID SA, F-92800 Puteaux (FR)
(72) Inventeur: Hamy, Michel, F-67000 Strasbourg (FR); Lebrun, Christian, F-59300 Valenciennes (FR); Thébault, Jean-Michel, F-59300 Valenciennes (FR); Maurer, Ghislain, F-57160 Châtel Saint Germain (FR); Destannes, Philippe, F-57000 Metz (FR)
(74) Mandataire: Ventavoli, Roger

(56) Documents cités:
- EP-A- 0 169 100
- EP-A- 0 178 981
- EP-A- 0 221 270
- FR-A- 1 302 971
- GB-A- 2 149 279

## Description

La présente invention concerne un récipient métallurgique destiné à contenir un bain de métal en fusion, et équipé d'au moins une électrode traversant la paroi de fond dudit récipient. De tels récipients, par exemple les fours à arc à courant continu pour la fusion de l'acier, comportent une cuve métallique et un revêtement intérieur en matériau réfractaire. Au moins une électrode, appelée électrode de sole, traverse le fond de la cuve et le revêtement réfractaire à la surface interne duquel elle affleure pour être en contact électrique avec le bain de métal contenu dans le récipient en cours d'utilisation.

Cette électrode, reliée à une borne d'une source de courant, est généralement fixée mécaniquement sur la cuve par un dispositif de fixation supportant l'électrode et maintenu sur la cuve par exemple par boulonnage. Pour éviter que la cuve ne soit portée au potentiel de l'électrode, des éléments électriquement isolants sont placés entre la cuve et le dispositif de fixation qui est en contact électrique avec l'électrode.

Lors de l'utilisation, pour la fusion de ferrailles et l'élaboration d'acier, de fours à arc à courant continu comportant une telle électrode de sole, on a pu constater des déficiences de l'isolation électrique provoquant des amorçages électriques entre l'électrode de sole ou ses moyens de fixation et la cuve métallique, entraînant des arrêts de production, nécessaires à la remise en conformité des caractéristiques de l'isolant électrique, cette remise en état nécessitant généralement la dépose du dispositif de fixation pour mettre en place un nouvel isolant.

La présente invention a notamment pour but de résoudre ces problèmes et d'éviter ces amorçages électriques ou au moins de réduire fortement leur fréquence.

Avec ces objectifs en vue, l'invention a pour objet un récipient métallurgique tel qu'un four à arc à courant continu, comprenant les caractéristiques de la revendication 1.

Il a en effet été constaté que, dans les installations utilisées jusqu'à maintenant, les problèmes d'amorçage électrique étaient dûs en particulier à l'écoulement sur la surface de la cuve de métaux lourds fondus tel que le plomb qui, en venant au contact des moyens de fixation de l'électrode sur la cuve, perturbent l'isolation électrique de ceux-ci. Plus précisément, le plomb contenu dans la charge de ferrailles introduites dans le four fond lors du fonctionnement de ce dernier. La densité du plomb et sa fluidité aux températures élevées régnant dans l'enceinte du four sont telles que le plomb fondu arrive à traverser le revêtement réfractaire du four.

Sa température de fusion relativement basse fait que, même en arrivant au contact de la paroi métallique de la cuve, le plomb reste liquide et s'écoule sur la surface interne de la cuve vers le point le plus bas de celle-ci. Il peut donc entrer en contact avec les moyens de fixation des électrodes et rompre l'isolation électrique de ceux-ci soit en venant au contact des éléments métalliques de cette fixation, soit même en s'infiltrant dans l'isolant électrique en détériorant celui-ci ou en dégradant ses caractéristiques isolantes.

De plus comme les moyens de fixation de l'électrode sont couramment refroidis, ils présentent une température inférieure à la température de solidification du plomb et, lorsque le plomb en fusion arrive à leur contact, il se solidifie et forme une liaison électrique permanente entre l'électrode et la cuve.

Comme on l'aura sans doute déjà compris, la présente invention permet d'empêcher le plomb fondu ruisselant sur la surface interne de la cuve d'atteindre les moyens de fixation de la ou des électrodes et évite ainsi la rupture de leur isolation électrique.

Selon une disposition particulière de l'invention, lesdits moyens de retenue empêchant le contact d'un liquide ruisselant à l'intérieur de la cuve avec les moyens de fixation de l'électrode comportent une paroi étanche entourant la zone de fixation de l'électrode, s'étendant vers l'intérieur de la cuve et liée à celle-ci de manière étanche, des moyens d'évacuation étant prévus pour collecter et évacuer le liquide hors de la cuve.

Ces moyens d'évacuation comprennent préférentiellement au moins un orifice traversant la cuve et situé à la périphérie de ladite paroi étanche formant retenue.

Grâce à ces dispositions, le plomb en fusion ruisselant sur la surface interne de la cuve se trouve collecté au point bas de celle-ci à l'extérieur de la paroi entourant l'électrode et ne peut donc atteindre les moyens de fixation de l'électrode. L'orifice réalisé dans la cuve permet l'évacuation du plomb fondu qui s'écoule par cet orifice et est récupéré par un collecteur. On évite ainsi l'accumulation de plomb fondu autour de la paroi de retenue et le risque de débordement de celui-ci par dessus ladite paroi.

De plus cette paroi étant liée à la cuve se trouve à une température suffisante pour éviter la solidification du plomb à son contact, évitant ainsi par conséquent le bouchage de l'orifice d'évacuation.

La paroi de retenue peut être simplement constituée par le bord d'une platine intermédiaire fixée sur la cuve à l'intérieur de celle-ci, et d'épaisseur suffisante pour constituer la retenue de plomb fondu à sa périphérie. Dans ce cas, l'électrode est fixée sur cette platine intermédiaire du côté situé vers l'extérieur du four et en est isolée électriquement.

Avantageusement la surface supérieure de cette platine intermédiaire, qui est traversée sans contact par l'électrode, est en pente vers sa périphérie. Cette disposition permet de collecter le plomb fondu traversant le réfractaire situé au-dessus de la platine et de le conduire à s'écouler dans la retenue formée par sa périphérie.

D'autres caractéristiques et avantages ressortiront de la description qui va être faite d'un mode de réalisation de l'invention dans le cas d'un four à arc à courant continu pour la fusion de matériaux ferrifères et l'élaboration d'acier liquide.

On se reportera aux dessins annexés dans lesquels :
- la figure 1 est une vue schématique en coupe d'un tel four à arc, équipé d'une électrode de sole, selon l'Art antérieur ;
- la figure 2 est une vue de détail de la zone de fixation de l'électrode de sole de ce four ;
- la figure 3 est une vue schématique partielle correspondante selon une réalisation conforme à l'invention.

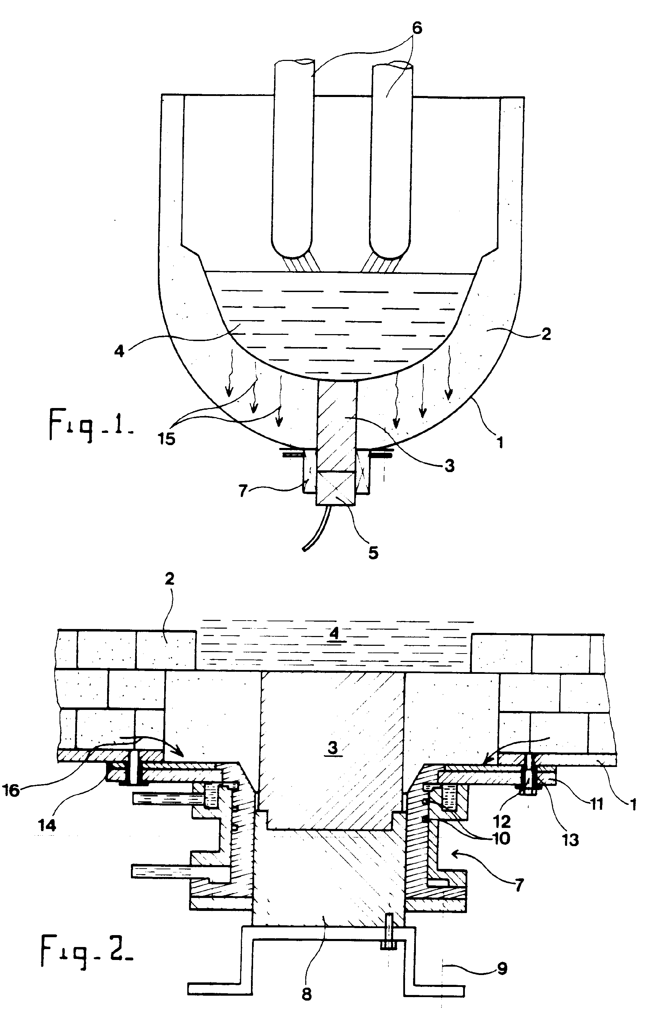

Le four représenté à la figure 1 comporte une cuve métallique 1 revêtue intérieurement d'un matériau réfractaire 2. Le fond du four est traversé par une électrode de sole 3 qui affleure à la surface interne du revêtement réfractaire de manière à être en contact avec un bain de métal liquide 4 résultant de la fusion de ferrailles préalablement introduites dans le four. L'électrode de sole 3 est reliée par un dispositif de connection 5 à une borne d'une alimentation électrique non représentée, l'autre borne de cette alimentation étant reliée à au moins une électrode de voûte 6. Une telle disposition est bien connue dans le domaine des fours à arc à courant continu.

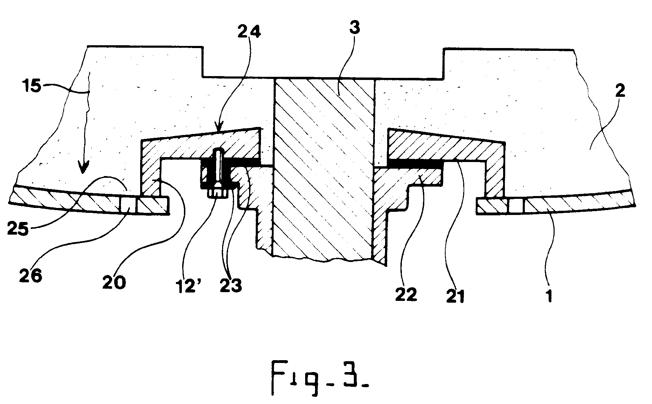

Un mode de fixation classique de l'électrode de sole sur le four, décrit notamment dans le document FR 2566984 est représenté à la figure 2. Le dispositif de fixation 18 de l'électrode de sole 3 comprend un manchon 7 entourant un embout 8 refroidi supportant l'électrode 3. L'embout 8 est maintenu sur le manchon 7 par des tirants représentés par leurs axes 9. Le manchon 7 est également refroidi par circulation interne d'un fluide de refroidissement tel que de l'eau dans des canaux 10.

Le manchon 7 est solidarisé, par exemple par soudure, à une bride 11 fixée sur la cuve 1 du côté extérieur de celle-ci par des vis 12, cette disposition étant prévue pour permettre une dépose aisée de l'ensemble du dispositif de fixation de l'électrode.

Pour assurer l'isolation électrique de la cuve par rapport à l'électrode de sole et son dispositif de fixation, une plaque 14 en matériau isolant est interposée entre la bride 11 et la cuve 1 et des canons et rondelles isolantes 13 isolent électriquement les vis 12 de la bride 11.

C'est en particulier dans des fours équipés de dispositifs de fixation de l'électrode de sole du type décrit ci-dessus ou similaires, que se sont manifestés les phénomènes d'amorçage électrique et de détérioration de l'isolation relevés au début de ce mémoire.

En effet, les ferrailles, constituant la charge introduite dans le four et fondue lors du fonctionnement du four, peuvent contenir du plomb. Du fait de sa densité et de sa fluidité aux hautes températures le plomb fondu s'infiltre dans le revêtement réfractaire 2 selon les flèches 15, et arrivé au contact de la cuve 1, s'écoule sur sa surface intérieure vers le point bas de celle-ci.

Il se trouve ainsi collecté à proximité de l'électrode de sole, selon les flèches 16 de la figure 2, où il détruit l'isolation électrique en permettant le passage du courant entre le dispositif de fixation de l'électrode et la cuve. De plus se trouvant alors dans une zone plus froide due à la proximité de l'électrode et de son manchon qui sont refroidis, le plomb peut alors se solidifier et s'accumuler dans cette zone, ce qui conduit à la formation d'une liaison électrique stable.

Après ces rappels expliquant les inconvénients des fours selon l'Art antérieur, on va maintenant décrire en liaison avec la figure 3 un mode préférentiel de réalisation de l'invention qui permet de résoudre ces problèmes.

A cette fin, le four comporte autour de l'électrode de sole 3 une paroi continue étanche 20 qui s'étend vers le haut à partir de la cuve 1 sur laquelle elle est soudée. Dans l'exemple représenté, cette paroi 20 est solidaire d'une platine intermédiaire 21 qui est surélevée par rapport au fond de la cuve. La bride 22 de fixation de l'électrode est fixé sur cette platine, de manière similaire à la liaison directe sur la cuve utilisée dans l'Art antérieur, par des vis 12′, avec interposition d'un isolant électrique 23 entre les vis 12′ et la platine intermédiaire 21 d'une part et la bride 22 d'autre part.

Ainsi, l'écoulement du plomb liquide sur le fond de la cuve 1 vers l'électrode 3 est empêché par la retenue formée par la paroi 20 et de plus le plomb qui s'infiltre à travers le réfractaire situé au-dessus de la platine intermédiaire 21 est collecté par celle-ci et dirigé vers le point bas 25 de la cuve autour de la paroi 20. Tout le plomb collecté à ce point bas peut s'écouler hors de la cuve par des orifices 26 réalisés à cet effet dans la cuve métallique 1 à la périphérie de la paroi 20.

Un avantage particulier de l'adaptation du four selon l'invention est que la zone de fixation de l'électrode sur le four se trouve surélevée par rapport au point bas de la cuve ce qui réduit encore les risques d'infiltration de plomb dans cette zone, même lors des basculements du four pour le décrassage ou la coulée du métal fondu.

Un autre avantage encore est d'éloigner de la zone froide proche de l'électrode et de son support le point bas de collecte du plomb, ce qui permet de maintenir la température de ce point bas supérieure à la température de solidification du plomb et évite donc la solidification de ce dernier à l'intérieur de la cuve.

L'invention n'est pas limitée à la disposition qui vient d'être décrite à titre d'exemple.

On pourra en particulier, pour améliorer l'isolation électrique, interposer, soit entre la platine 21 et la paroi 20 dans le cas où elles sont dissociées, soit entre la paroi 20 et la cuve 1, un élément isolant électrique, ou encore réaliser la paroi 20 elle-même en un matériau isolant, l'assemblage de ces pièces sur la cuve étant alors réalisé en conséquence de manière à préserver leur étanchéité et l'isolation électrique voulue.

La platine intermédiaire 21 peut également reposer directement sur le fond de la cuve, son épaisseur étant alors prévue suffisante pour que le bord de cette platine soit assez haut pour constituer la retenue du plomb.

L'invention a été décrite ci-dessus dans le cadre d'un four à arc à courant continu comportant une seule électrode de sole. Elle peut aussi être appliquée à des récipients métallurgiques comportant plusieurs électrodes. Dans ce cas soit une paroi de retenue entoure l'ensemble des électrodes, soit chaque électrode est entourée par une paroi de retenue particulière, le ou les orifices d'évacuation pouvant alors n'être réalisés qu'au point le plus bas de la cuve.

Les moyens de fixation et d'isolation électrique des électrodes décrit ci-dessus pourront aussi être modifiés ou remplacés par une disposition technologique équivalent.

## Revendications

1. Récipient métallurgique tel qu'un four à arc à courant continu, comprenant une cuve métallique (1) révêtue intérieurement de matériau réfractaire (2) et au moins une électrode (3) traversant le fond du récipient et reliée à une borne d'une alimentation électrique, l'électrode étant fixée sur la cuve métallique par des moyens de fixation mécanique (11,12) et isolée électriquement de celle-ci, caractérisé en ce que, dans le but d'empêcher qu'un liquide ruisselant sur la surface interne de la cuve vienne au contact desdits moyens de fixation de l'électrode, le récipient comporte une paroi étanche (20) entourant la zone de fixation de l'électrode, s'étendant vers l'intérieur de la cuve et liée à celle-ci de manière étanche.

2. Récipient selon la revendication 1 caractérisé en ce, des moyens d'évacuation sont prévus pour collecter et évacuer le liquide hors de la cuve.

3. Récipient selon la revendication 2 caractérisé en ce que les moyens d'évacuation comprennent au moins un orifice (26) traversant la cuve (1) et situé à la périphérie de la paroi étanche (20).

4. Récipient selon la revendication 2 caractérisé en ce que la paroi étanche (20) porte une platine intermédiaire (21) surélevée par rapport au fond de la cuve (1) et sur laquelle est fixée une bride (22) de maintien de l'électrode.

5. Récipient selon la revendication 4 caractérisé en ce que la surface supérieure (24) de la platine intermédiaire (21) est inclinée vers sa périphérie.

6. Récipient selon la revendication 4 caractérisé en ce que la platine intermédiaire (21) est isolée électriquement de la cuve (1).

## Patentansprüche

1. Metallurgisches Gefäß, wie für einen Gleichstrom-Lichtbogenofen, mit einer innen mit einem feuerfesten Material (2) ausgekleideten Metallwanne (1) und wenigstens einer den Boden des Gefäßes durchsetzenden, an eine Anschlußklemme für die elektrische Versorgung angeschlossenen Elektrode (3), welche Elektrode mit Hilfe einer mechanischen Befestigungseinrichtung (11, 12) an der Metallwanne befestigt und von dieser elektrisch isoliert ist, dadurch gekennzeichnet, daß das Gefäß zum Zwecke der Verhinderung einer über die Innenfläche der Wanne laufenden Flüssigkeit am Kontaktieren der Befestigungseinrichtung eine dichte, den Befestigungsbereich für die Elektrode umgebende Wand (20) aufweist, die sich gegen das Innere der Wanne erstreckt und dicht mit derselben verbunden ist.

2. Gefäß nach Anspruch 1, dadurch gekennzeichnet, daß Entleereinrichtungen zum Sammeln und Entleeren der Flüssigkeit aus der Wanne vorgesehen sind.

3. Gefäß nach Anspruch 2, dadurch gekennzeichnet, daß die Entleereinrichtungen eine die Wanne (1) durchsetzende und am Umfange der dichten Wand (20) gelegene Öffnung (26) aufweisen.

4. Gefäß nach Anspruch 2, dadurch gekennzeichnet, daß die dichte Wand (20) eine bezüglich des Bodens der Wanne (1) hochliegende Zwischenplatte (21) trägt, an der eine Halterung (22) für die Elektrode befestigt ist.

5. Gefäß nach Anspruch 4, dadurch gekennzeichnet, daß die obere Fläche (24) der Zwischenplatte (21) gegen ihren Umfang hin geneigt ist.

6. Gefäß nach Anspruch 4, dadurch gekennzeichnet, daß die Zwischenplatte (21) von der Wanne (1) elektrisch isoliert ist.

## Claims

1. Metallurgical vessel such as a direct-current arc furnace, comprising a metal housing (1) lined on the inside with refractory material (2) and at least one electrode (3) passing through the bottom of the vessel and connected to a terminal of an electrical power supply, the electrode being fastened to the metal housing by mechanical fastening means (11, 12) and insulated electrically from the said housing, characterized in that, with the aim of preventing a liquid flowing over the inner surface of the housing from coming into contact with the said fastening means of the electrode, the vessel comprises a leaktight wall (20) surrounding the fastening zone of the electrode, extending towards the inside of the housing and connected to the latter in a leaktight manner.

2. Vessel according to Claim 1, characterized in that discharge means are provided for collecting and discharging the liquid out of the housing.

3. Vessel according to Claim 2, characterized in that the discharge means comprise at least one orifice (26) passing through the housing (1) and located at the periphery of the leaktight wall (20).

4. Vessel according to Claim 2, characterized in that the leaktight wall (20) carries an intermediate small plate (21) which is raised relative to the bottom of the housing (1) and to which a flange (22) for holding the electrode is fastened.

5. Vessel according to Claim 4, characterized in that the upper surface (24) of the intermediate small plate (21) is inclined towards its periphery.

6. Vessel according to Claim 4, characterized in that the intermediate small plate (21) is insulated electrically from the housing (1).
